# EUROPEAN PATENT SPECIFICATION

(11) **EP 3 441 212 B1**
(45) Date of publication and mention of the grant of the patent: **01.11.2023**
(21) Application number: 18174248.7
(22) Date of filing: 25.05.2018
(51) Int. Cl.: B29C 70/54, B29C 64/118, B29C 70/38, B29C 70/22, B29C 70/02, B29B 15/10, B33Y 70/10

(54) **ADDITIVE MANUFACTURING FIBER PREFORM ARTICLE**
ADDITIVE HERSTELLUNG VON FASER-VORFORMLINGEN
FABRICATION ADDITIVE DE PRÉFORME FIBREUSE

(30) Priority: 11.08.2017 US 201715675244
(43) Date of publication of application: 13.02.2019
(73) Proprietor: The Boeing Company, Arlington, VA 22202 (US)
(72) Inventor: KOZAR, Michael Patrick, Chicago, IL Illinois 60606-1596 (US); WILENSKI, Mark Stewart, Chicago, IL Illinois 60606-1596 (US); HARRISON, Samuel F., Chicago, IL Illinois 60606-1596 (US)
(74) Representative: Duxbury, Stephen

(56) References cited:
- EP-A1- 1 419 875
- WO-A1-2016/147646
- US-A- 5 936 861
- US-A1- 2008 020 193
- US-A1- 2015 158 246
- US-A1- 2017 173 868

## Description

### FIELD

The present disclosure relates to fiber tows for additive manufacturing.

### BACKGROUND

Additive manufacturing may include a 3D printing process that uses a continuous filament that is dispensed or extruded from a dispenser or print head that moves in two- or three-dimensions under computer control to manufacture an article. Current additive manufacturing systems "print" articles by sequentially or successively laying down layers on top of and/or beside each other. In some examples, the continuous filament is comprised of a curable material such as a resin or polymer that is cured during the additive manufacturing process.

WO 2016/147646 relates to a sheet-shaped reinforced fiber substrate that produces a less waste in manufacturing a fiber reinforced plastic molded article and reduces a positional deviation of a reinforced fiber substrate for reinforcement; a preform; and a fiber reinforced plastic molded article. The sheet-shaped reinforced fiber substrate comprises bundles of reinforced fibers aligned with longitudinal directions thereof set in one direction, the positions of the adjacent bundles of reinforced fibers being constrained to each other to keep a sheet-shaped form. The sheet-shaped reinforced fiber substrate is characterized in that, in the sheet-shaped reinforced fiber substrate, a distribution amount of the reinforced fibers is partially increased and a weight of the distributed reinforced fibers per unit area is non-uniform.

US 2017/0173868 A1 relates to 3D printing of a combined continuous/random fiber reinforced composite filament including a plurality of axial fiber strands extending substantially continuously within a matrix material of the fiber reinforced composite filament as well as a multiplicity of short chopped fiber rods extending at least in part randomly within the same matrix material via a deposition head including a conduit continuously transitioning to a substantially rounded outlet tipped with an ironing lip, which is driven to flatten the fiber reinforced composite filament against previously deposited portions of the part, as the matrix material and included therein a first proportion of the short chopped fiber rods are is flowed interstitially among the axial fiber strands spread by the ironing lip.

US2008/020193A1 relates to a hybrid fibre tow that can be used in freeform fabrication.

### SUMMARY

A method of additively manufacturing according to claim 1 and an additive manufacturing preform according to claim 5 are disclosed.

Additive manufacturing fiber tows comprise a bundle of elongate fibers. Bindments, which may include particles, elongated bindment segments, coating segments, and/or encircling bindments are interposed among the plural elongate fibers to provide interstitial regions among the plural elongate fibers and the bindments.

Methods of additively manufacturing an article with a configuration comprise dispensing the additive manufacturing fiber tow with bindments in multiple successive courses in the configuration to additively manufacture the article. The methods may include fixing the bindments together to hold the article in the configuration with the interstitial regions among the plural elongate fibers and the bindments. A solidifiable matrix material may be applied to the article, including to the interstitial regions, and the solidifiable matrix material may be solidified to form a finished article. Some systems for additively manufacturing a part comprise a supply of additive manufacturing fiber tow with bindments and a delivery guide positioned to receive the fiber tow from the supply and to dispense the additive manufacturing fiber tow with bindments to additively manufacture the article.

### BRIEF DESCRIPTION OF THE DRAWINGS

Fig. 1 is a schematic side view of an elongate additive manufacturing fiber tow.
Fig. 2 is a schematic cross sectional view of the elongate additive manufacturing fiber tow of Fig. 1.
Fig. 3 includes a flowchart illustrating an example additive manufacturing method.
Fig. 4 includes illustrations corresponding to example operations of the method of Fig. 3.
Fig. 5 is a fragmentary illustration of an example arrangement that may correspond to an article with interstitial regions available to receive a solidifiable matrix material.
Fig. 6 is a fragmentary illustration of the article of Fig. 5 with solidifiable matrix material (indicated by stipple) incorporated into the interstitial regions.
Fig. 7 schematically illustrates an alternative example of an elongate additive manufacturing fiber tow in a side view.
Fig. 8 schematically illustrates the alternative example of an elongate additive manufacturing fiber tow of Fig. 7 in cross-section.
Fig. 9 schematically illustrates another alternative example of an elongate additive manufacturing fiber tow in a side view.
Fig. 10 schematically illustrates the alternative example of an elongate additive manufacturing fiber tow of Fig. 9 in cross-section.
Fig. 11 schematically illustrates a sectional side view of still another example of elongate additive manufacturing fiber tows that are fixed together as part of a composite or multi-course article.
Fig. 12 is a schematic illustration representing a system for additive manufacturing that utilize multi-part filaments.

### DESCRIPTION

Additive manufacturing fiber tows and related systems and methods are disclosed herein. Generally, in the figures, elements that are likely to be included in a given example are illustrated in solid lines, while elements that are optional to a given example are illustrated in broken lines. However, elements that are illustrated in solid lines are not essential to all examples of the present disclosure, and an element shown in solid lines may be omitted from a particular example without departing from the scope of the present invention as defined by the appended claims.

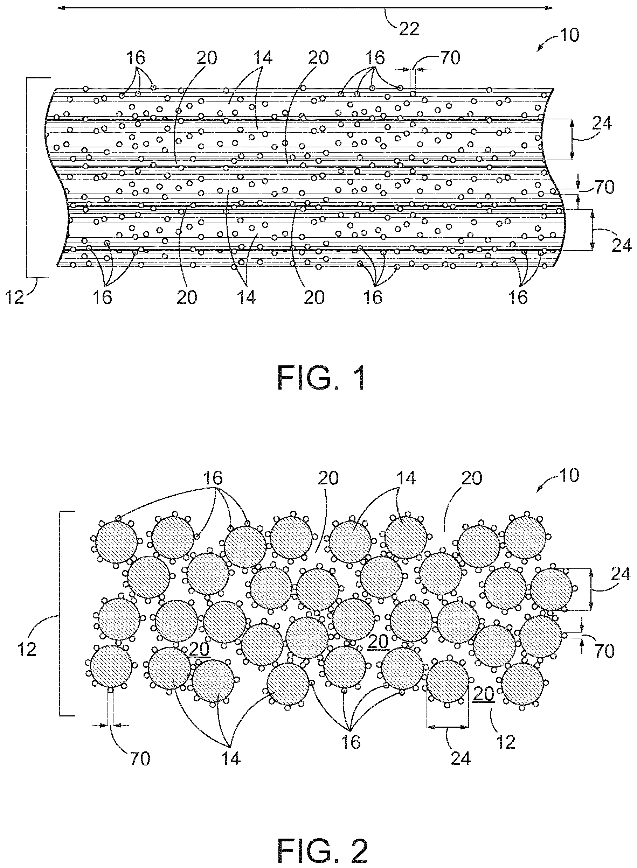

As schematically illustrated in Figs. 1 and 2 an elongate additive manufacturing fiber tow 10 is shown in a side view and in cross-section, respectively. Elongate additive manufacturing fiber tow 10 additionally or alternatively may be referred to as additive manufacturing tow 10 or fiber tow 10. Fiber tow 10 includes a bundle 12 of multiple elongate fibers 14 and bindments 16 interposed between, among, and/or on the elongate fibers 14. The bindments 16 may take any suitable form or structure, such as including or being configured as particles, as illustrated in Figs. 1 and 2. Other illustrative, non-exclusive configurations of bindments 16 are described below in greater detail. The bindments 16 may be characterized in that they are distinct from the plural elongate fibers 14 and establish among the plural elongate fibers 14 and the bindments 16 plural interstitial regions 20 (e.g., open spacings and/or voids) that give fiber tow 10 a porous configuration, and further that the bindments 16 may be fixed together and with the plural elongate fibers 14 to hold additive manufacturing fiber tow 10 in a configuration at least semi-rigidly while maintaining the plural interstitial regions 20. In examples in which bindments 16 do not extend a full length of a fiber tow 10, and in which a plurality of bindments 16 are utilized, the bindments 16 may be described as segmented bindments.

The elongate fibers 14 typically, or at least in their initially manufactured form, have lengths 22 that are significantly greater than their diameters 24. (Diameter 24 herein refers to a sectional, lateral dimension through a center of a body and does not imply or require that the body have a circular cross section. Elongate fibers 14 have cross sections that may be circular or non-circular.) As illustrative, non-exclusive examples, the elongate fibers 14 each may have a length 22 that is at least 10, at least 100, at least 1,000, at least 10,000, at least 100,000, or at least 1,000,000 times greater than its diameter 24. In accordance with these examples, the elongate fibers 14 may be referred to as being continuous or chopped. Additive manufacturing fiber tow 10 is configured for use as a feedstock, or at least as a component of a feedstock, for an additive manufacturing system, such as may be referred to as a 3-D printer or a fused filament fabrication (FFF) system, for example.

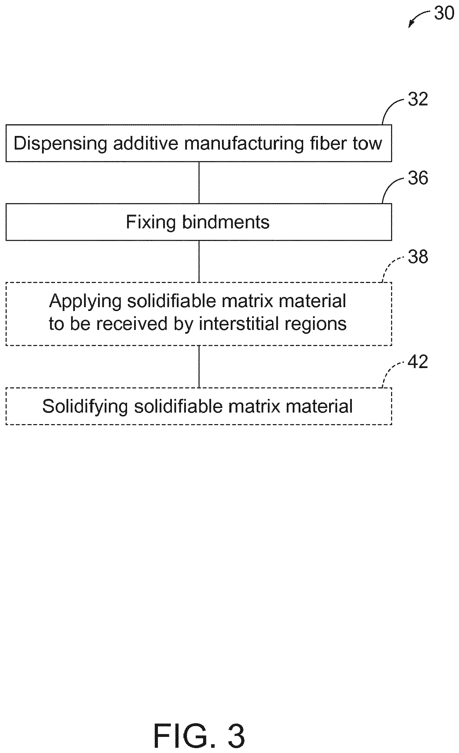

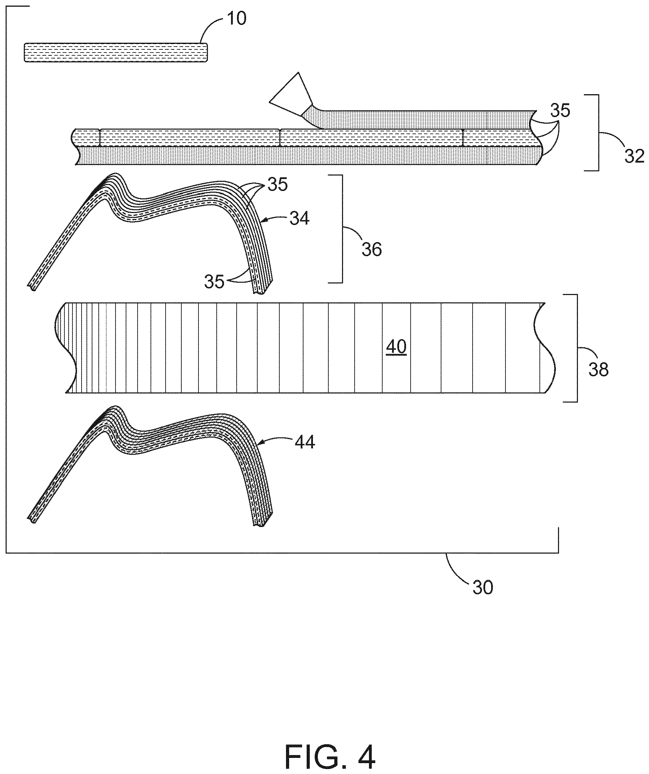

Fig. 3 includes a flowchart illustrating an example additive manufacturing method 30, and Fig. 4 includes illustrations corresponding and/or relating to example operations of method 30.

Method 30 includes dispensing 32 additive manufacturing fiber tow 10 according to a configuration of an article 34 (Fig. 4) that is being additively manufactured. As examples, the additive manufacturing fiber tow 10 may be dispensed in a two- or three-dimensional arrangement corresponding to a configuration of article 34, may be dispensed on one or more forms or jigs or other structures that correspond to the configuration of article 34 or a portion of it, or may be dispensed without a form or jig or other structure that corresponds to the configuration of article 34 or a portion of it. As further examples, the additive manufacturing fiber tow 10 may be dispensed in one or more sequential or successive courses 35 that may be formed and/or may extend along a length individually, and/or multiple courses 35 may be formed partly or completely atop and/or adjacent each other and may be parallel and/or transverse to each other. In examples, courses 35 may be formed in two-dimensional and/or three-dimensional arrangements that may include any or all of two-dimensional layers or planes, either alone or as successive layers that together provide three-dimensional structures, or as individual courses 35 or groups of courses 35 that may form 2D or 3D chain-link or truss structures, or other structural configurations.

Method 30 further includes fixing 36 the bindments 16 of the additive manufacturing fiber tow 10 in the configuration of article 34. The fixing 36 may include any or all of adhering, bonding, melting, fusing, curing, etc. the bindments 16 to hold or secure them together and/or to elongate fibers 14 to hold additive manufacturing fiber tow 10 in a configuration with a fixed rigidity (e.g., at least a semi-rigidity) that is greater than a rigidity of additive manufacturing fiber tow 10 before the bindments 16 are fixed. Fixing 36 also includes maintaining the plural interstitial regions 20 (Fig. 1) that give fiber tow 10 a porous configuration. In examples, sequential or successive courses of the additive manufacturing fiber tow 10 may be fixed together by the bindments 16. In some examples, interstitial regions 20 may change from their original form as a result of fixing 36, while interstitial regions 20 overall remain. As examples, the bindments 16 may be fixed by one or more of adhesion, fusion, chemical reaction, radiation cure, or intermolecular forces between the bindments 16 and/or between the bindments 16 and the elongate fibers 14. In some examples, elongate fibers 14 may have at least a fiber melting temperature, and bindments 16 (e.g., glass) may have a bindment melting temperature lower than the filament melting temperature, so that fixing 36 may include melting bindments 16 to adhere them together.

In some examples, fixing 36 the bindments 16 of the additive manufacturing fiber tow 10 provides a rigidity that is sufficiently greater than an initial rigidity of additive manufacturing fiber tow 10 and/or elongate fibers 14 to hold additive manufacturing fiber tow 10 in the configuration of article 34. According to the claimed invention the article 34 is a preform (e.g., an uncompleted article of manufacture that is formed or configured with a shape to be completed subsequently). For example, article 34 may be or include a preform repair patch that may be applied to, infused with, and solidified on a structure to be repaired. Method 30 further may include applying 38 a solidifiable matrix material 40 (Fig. 4) to article 34 to be received by the interstitial regions 20, and solidifying 42 of the solidifiable matrix material 40 to form a finished article 44. In some examples, the plural interstitial regions 20 may include plural open spacings or voids among the elongate fibers 14 and the bindments 16. Also in some examples, some or all of the bindments 16 may be soluble in or otherwise able to meld with or dissolve into the solidifiable matrix material 40.

As used herein, a "solidifiable matrix material" is a material that is initially not in a solid form (e.g., in a liquid phase or in a similar flowable state) and is configured to be solidified into a solid phase or a similar non-flowable state. In some examples, the solidifiable matrix material may be curable so that the solidifiable matrix material, which may be referred to as a curable, solidifiable matrix material, may be cured as a result of cross-linking of polymer chains, such as responsive to an application of a curing energy. In some examples employing such a curable, solidifiable matrix material, solidifying 42 may include applying a curing energy that may comprise one or more of heat, ultraviolet light, visible light, infrared light, x-rays, electron beams, and microwaves, for example. Curable, solidifiable matrix materials may take the form of one or more of a polymer, a resin, a thermoset, a photopolymer, an ultraviolet photopolymer, a visible-light photopolymer, an infrared-light photopolymer, and an x-ray photopolymer. As used herein, a photopolymer is a polymer that is configured to be cured in the presence of light, such as one or more of ultraviolet light, visible-light, infrared-light, and x-rays. In other examples, the solidifiable matrix material may be or include a thermoplastic and may be referred to as a thermoplastic solidifiable matrix material, and solidifying 42 may include providing a reduced temperature or other environment in which the thermoplastic matrix material can solidify and/or set. Applying 38 the solidifiable matrix material 40 may include, for example, one or more of spraying, coating, misting, infusing, and dripping the additive manufacturing fiber tow with the solidifiable matrix material, or dipping or otherwise inserting article 34 into a bath, reservoir, or other supply of solidifiable matrix material 40.

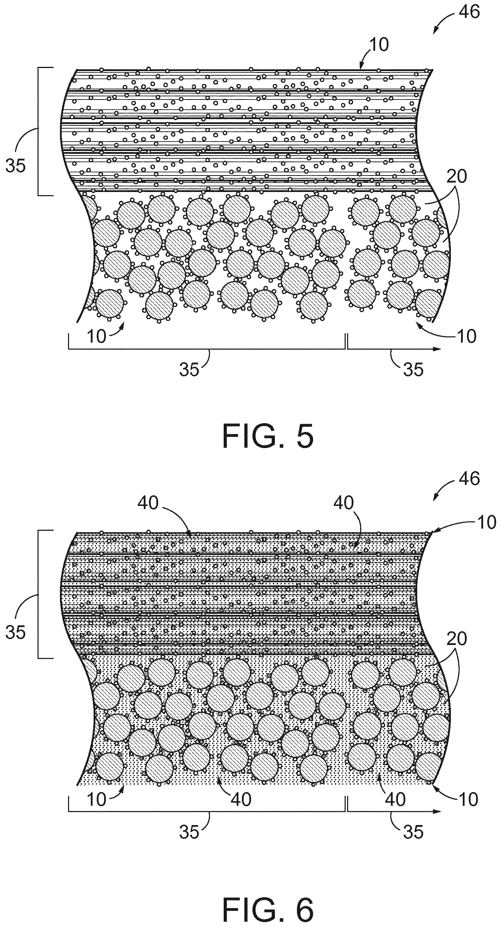

Fig. 5 is a fragmentary illustration of an example arrangement 46 that may correspond to article 34 (e.g., Fig. 4, such as a preform according to the claimed invention with fixed bindments 16), which includes interstitial regions 20 available to receive the solidifiable matrix material 40 and courses 35, some of which may be transverse to others. Fig. 6 is a fragmentary illustration of example arrangement that may correspond to finished article 44 (Fig. 4) with solidifiable matrix material 40 (indicated by stipple) incorporated into interstitial regions 20.

An aspect of additive manufacturing fiber tow 10 is that it allows and/or supports manufacture of an article 34, such as a preform, that may be manufactured and stored for subsequent use and application of solidifiable matrix material to form a finished article 44. As described hereinabove, for example, article 34 may be or include a preform repair patch that may be subsequently applied to, infused with, and solidified on a structure to be repaired. In other examples, article 34 may be or include a preform for use to manufacture a finished article or end product/item. As a result, such preforms may be manufactured and stored until needed, which may provide improved functionality of the preform article 34 without a premature application or use of a solidifiable matrix material.

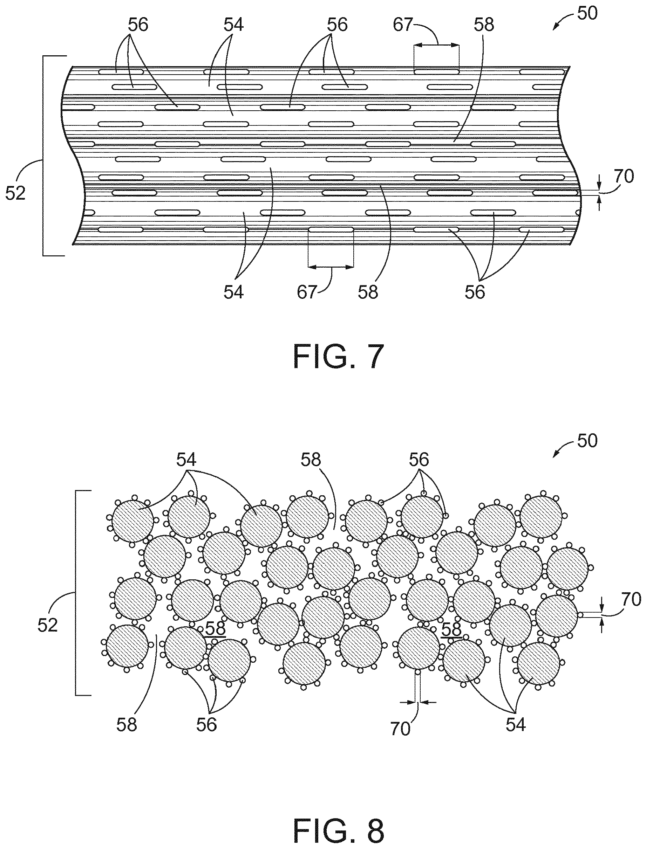

As an alternative example, Figs. 7 and 8 schematically illustrate an elongate additive manufacturing fiber tow 50 in a side view and in cross-section, respectively. Additive manufacturing fiber tow 50 includes a bundle 52 of multiple elongate fibers 54 and bindments 56 interposed between, among, and/or on the elongate fibers 54. Elongate fibers 54 may be analogous to, or the same as, elongate fibers 14 of Figs. 1 and 2. The bindments 56 may include or be configured as elongated bindment segments among elongate fibers 54. The bindments 56 establish among the plural elongate fibers 54 and the bindments 56 plural interstitial regions 58 that give additive manufacturing fiber tow 50 a porous configuration. Method 30 of Fig. 3 and the illustrations of Fig. 4 are similarly applicable to additive manufacturing fiber tow 50.

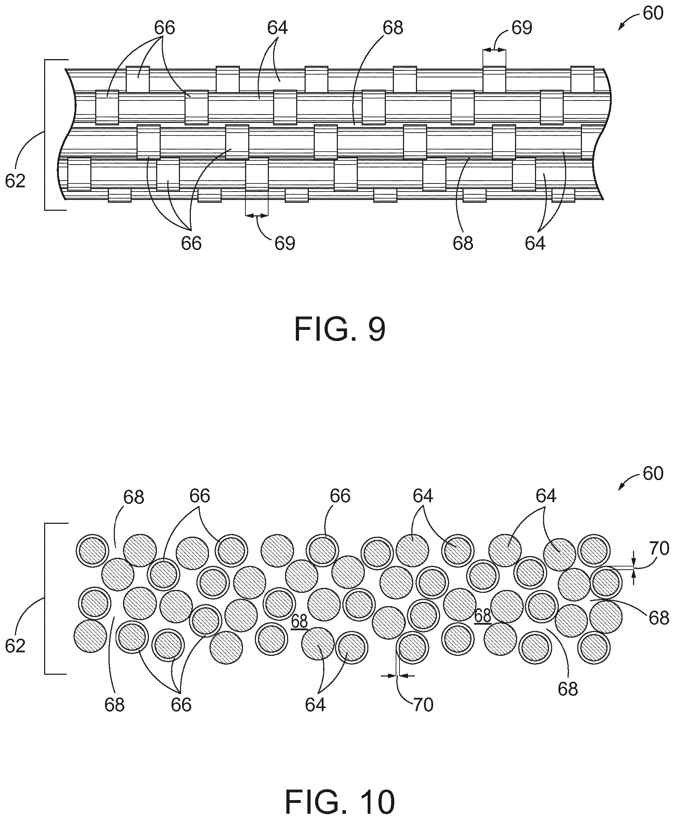

As another alternative example, Figs. 9 and 10 schematically illustrate an elongate additive manufacturing fiber tow 60 in a side view and in cross-section, respectively. Additive manufacturing fiber tow 60 includes a bundle 62 of multiple elongate fibers 64 and bindments 66 interposed between, among, and/or on the elongate fibers 64. Elongate fibers 64 may be analogous to, or the same as, elongate fibers 14 of Figs. 1 and 2 and elongate fibers 54 of Figs. 7 and 8. The bindments 66 may include or be configured as coating segments on elongate fibers 64. The bindments 66 establish among the plural elongate fibers 64 and the bindments 66 plural interstitial regions 68 that give additive manufacturing fiber tow 60 a porous configuration. Method 30 of Fig. 3 and the illustrations of Fig. 4 are similarly applicable to additive manufacturing fiber tow 60.

As examples, the bindments 16 may include or be configured as plural particles (e.g., some or all of which may have generally unitary aspect ratios, i.e., having generally equal dimensions in transverse directions). The bindments 56 may include or be configured as plural elongated bindment segments (e.g., which may have elongated lengths 67, but are generally shorter than elongate fibers 54, and so are "segmented"). The bindments 66 may include or be configured as coatings on the elongate fibers 64 with lengths 69 less than the lengths of elongate fibers 64. Elongate fibers 14, 54, and 64 may be generally of filament diameter 24. The bindments 16, 56, and 66 may be generally of a bindment thickness 70 (e.g., diameter) that is less than or equal to twice the filament diameter 24. In other examples, the bindment thickness 70 is less than or equal to the filament diameter 24, and in still other examples, bindment thickness 70 is less than or equal to 25 percent of the filament diameter 24. In additive manufacturing fiber tows 50 and 60, for example, respective lengths 67 and 69 of segmental bindments 56 and 66 may be at least 0.5 times, or as much as 1,000 times greater than bindment thickness 70.

As examples, bindments 16, 56, and 66 may include, comprise, or be formed of one or more of a thermoplastic, an adhesive, a metal, a glass, and/or a catalyst or a reactive component of the solidifiable matrix material 40. As illustrative, non-exclusive examples, elongate fibers 14, 54, and 64 may include, comprise, or be formed of one or more of carbon fibers, glass fibers, aramid fibers, boron fibers, silicon-carbide fibers, ceramic fibers, optical fibers, fiber bundles, fiber weaves, fiber braids, wires, metal wires, conductive wire, and wire bundles. In some examples, bindments 16, 56, and 66 are of one or more materials that are different from the one or more materials of respective elongate fibers 14, 54, and 64. Also in some examples, some of bindments 16, 56, and 66 of respective elongate additive manufacturing fiber tows 10, 50, and 60 are of at least one material that is soluble in or otherwise able to meld with or dissolve into the solidifiable matrix material 40, while others of the respective bindments 16, 56, and 66 are of at least one material that is not soluble in or otherwise able to meld with or dissolve into the solidifiable matrix material 40.

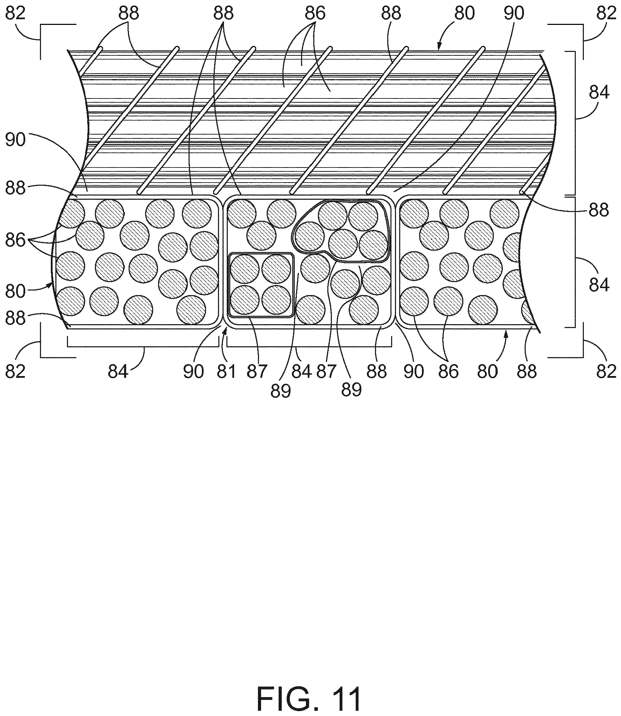

As another alternative example, Fig. 11 schematically illustrates a sectional side view of multiple elongate additive manufacturing fiber tows 80 and 81 that are fixed together adjacent each other as respective courses in an article 82. Each of additive manufacturing fiber tows 80 and 81 includes a bundle 84 of multiple elongate fibers 86 and one or more bindments 88 that encircle (e.g., spirally) bundle 84 of multiple elongate fibers 86. As an example, elongate additive manufacturing fiber tow 81 further includes one or more bindments 87 that encircle (e.g., spirally) one or more subsets (e.g., two shown) of multiple elongate fibers 86 within elongate additive manufacturing fiber tow 81. Bindments 87 establish around the subsets of elongate fibers 86 that are encircled by the bindments 87, and the adjacent elongate fibers 86, interstitial regions 89 that give additive manufacturing fiber tow 81 a porous configuration. Bindments 87 and 88 additionally or alternatively may be described as encircling bindments. In some examples, bindments 88 may be continuous bindments that extend a full length, or substantially a full length, of a corresponding fiber tow. Additionally or alternatively, in some examples, bindments 87 and 88 may be segmented bindments that extend only a portion of a corresponding fiber tow.

In some examples, one or more of additive manufacturing fiber tows 80 and 81 further may include bindments interposed between, among, and/or on the elongate fibers 86, as described hereinabove. Elongate fibers 86 may be analogous to, or the same as, elongate fibers 14 of Figs. 1 and 2, elongate fibers 54 of Figs. 7 and 8, and elongate fibers 64 of Figs. 9 and 10. The Bindments 88 establish between the adjacent additive manufacturing fiber tows 80 and/or 81 plural inter-course interstitial regions 90 (i.e., open spacings and/or voids) that give article 82 a porous configuration, at least when in a preform configuration prior to solidifiable matrix material 40 being received within the plural inter-course interstitial regions 90. In examples, the bindments 87 and 88 may be fixed with the plural elongate fibers 86 to hold additive manufacturing fiber tows 80 and/or 81 in a configuration at least semi-rigidly while maintaining the inter-course interstitial regions 90 and/or the interstitial regions 89. In some examples, the bindments 88 may include or be configured as coating segments on additive manufacturing fiber tows 80. Method 30 of Fig. 3 and the illustrations of Fig. 4 are similarly applicable to additive manufacturing fiber tows 80.

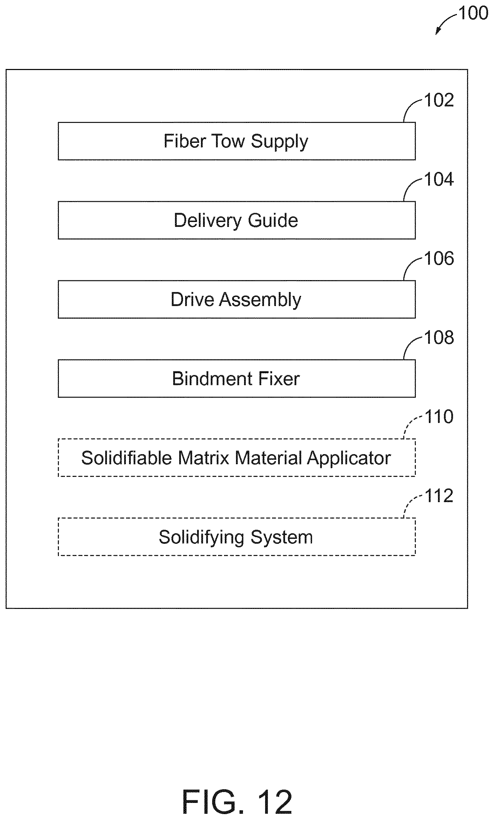

Fig. 12 is a block diagram of a system 100 for additively manufacturing an article. System 100 includes a supply 102 of the additive manufacturing fiber tow, which may include any of additive manufacturing fiber tows 10, 50, 60, and/or 80, for example. A delivery guide 104 is positioned to receive the additive manufacturing fiber tow from the supply 102 and configured to dispense the additive manufacturing fiber tow to additively manufacture the article. A drive assembly 106 is operatively coupled to the delivery guide 104 and configured to selectively move the delivery guide 104 in two- or three-dimensions to additively manufacture the article. A bindment fixer 108 is configured to rigidly fix the bindments of the additive manufacturing fiber tow with the plural elongate fibers. In some examples, a solidifiable matrix material applicator 110 applies solidifiable matrix material to the article, and a solidifying system 112 solidifies the solidifiable matrix material.

Bindment fixer 108 may be configured to perform one or more operations as described with reference to fixing 36 (Fig. 3) of method 30 (Fig. 3). In some examples, bindment fixer 108 may be configured to provide one or more of adhesion, fusion, chemical reaction, radiation cure, or intermolecular forces between the bindments of an additive manufacturing fiber tow, as described herein. Solidifiable matrix material applicator 110 may be configured to perform one or more operations as described with reference to applying 38 (Fig. 3) the solidifiable matrix material of method 30 (Fig. 3). In some examples, solidifiable matrix material applicator 110 may be configured to provide one or more one or more of spraying, coating, misting, infusing, and dripping the additive manufacturing fiber tow with the solidifiable matrix material, or dipping or otherwise inserting an article into a bath, reservoir, or other supply of solidifiable matrix material. Likewise, solidifying system 112 may be configured to perform one or more operations as described with reference to solidifying 42 (Fig. 3) the solidifiable matrix material of method 30 (Fig. 3). In some examples, solidifying system 112 may be configured to apply a curing energy that may comprise one or more of heat, ultraviolet light, visible light, infrared light, x-rays, electron beams, and microwaves, and in other examples solidifying system 112 may be configured to provide a reduced temperature or environment in which a solidifiable matrix material can solidify and/or set.

According to the claimed invention, fixing 36 the bindments of the additive manufacturing fiber tow 10 provides a rigidity that is sufficiently greater than an initial rigidity of additive manufacturing fiber tow 10 and/or elongate fibers 14 to hold additive manufacturing fiber tow 10 in the configuration of article 34. According to the claimed invention the article 34 is a preform (e.g., an uncompleted article of manufacture that is formed or configured with a shape to be completed subsequently). For example, article 34 may be or include a preform repair patch that may be applied to, infused with, and solidified on a structure to be repaired. Method 30 further may include applying 38 a solidifiable matrix material 40 (Fig. 3) to article 34 to be received by the interstitial regions 20, and solidifying 42 of the solidifiable matrix material 40 to form a finished article 44. In some examples, the plural interstitial regions 20 may include plural open spacings among the elongate fibers 14 and the bindments. Also in some examples, some or all of the bindments may be soluble in or otherwise able to meld with (e.g., dissolve into) the solidifiable matrix material 40.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a non-limiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

## Claims

1. A method of additively manufacturing a fiber preform article (34), comprising:
dispensing (32) an additive manufacturing fiber tow (10,50,60,80) in a fiber preform article (34) configuration, the additive manufacturing fiber tow (10,50,60,80) including a bundle (12,52,62,84) of plural elongate fibers (14,54,64,86) and bindments (16,56,66,88) interposed among the plural elongate fibers (14,54,64,86), the bindments (16,56,66,88) establishing plural interstitial regions (20,58,68,89,90) among the plural elongate fibers (14,54,64,86); and
fixing (36) the bindments (16,56,66,88) with the elongate fibers to hold the additive manufacturing fiber tow (10,50,60,80) in the fiber preform article (34) configuration with the plural interstitial regions (20,58,68,89,90) among the plural elongate fibers (14,54,64,86).

2. The method of claim 1 further comprising fixing the bindments (16,56,66,88) using a solidifiable matrix material (40) disposed among the plural elongate fibers (14,54,64,86).

3. The method of any of claims 1 to 2, wherein:
dispensing (32) the additive manufacturing fiber tow (10,50,60,80) includes dispensing the additive manufacturing fiber tow (10,50,60,80) in plural successive courses of additive manufacturing fiber tow (10,50,60,80); and
fixing (36) the bindments (16,56,66,88) with the elongate fibers includes fixing together the bindments (16,56,66,88) of the plural successive courses of additive manufacturing fiber tow (10,50,60,80).

4. The method of any of claims 1 to 3 further comprising:
applying (38) a solidifiable matrix material (40) to the fiber preform article (34), including applying the solidifiable matrix material (40) to the plural interstitial regions (20,58,68,89,90); and
solidifying (42) the solidifiable matrix material (40).

5. An additive manufacturing fiber preform article manufactured according to the method of claim 1, comprising an additive manufacturing fiber tow (10,50,60,80) dispensed in a preform article configuration, the additive manufacturing fiber tow (10,50,60,80) comprising:
a bundle (12,52,62,84) of plural elongate fibers (14,54,64,86) of a first rigidity; and
bindments (16,56,66,88) interposed among the plural elongate fibers (14,54,64,86) to provide a second rigidity greater than the first rigidity to hold the additive manufacturing fiber tow (10,50,60,80) in the preform article configuration, the bindments (16,56,66,88) establishing plural interstitial regions (20,58,68,89,90) among the plural elongate fibers (14,54,64,86) and the bindments (16,56,66,88) to receive a solidifiable matrix material (40) among the plural elongate fibers (14, 54, 64, 86) of the fiber preform article.

6. The additive manufacturing fiber preform of claim 5, wherein at least some of the bindments (16,56,66,88) are configured to be soluble in the solidifiable matrix material (40).

7. The additive manufacturing fiber preform of any of claims 5 to 6, wherein some of the bindments (16,56,66,88) are configured to be soluble in the solidifiable matrix material (40) and others of the bindments (16,56,66,88), are configured for not being soluble in the solidifiable matrix material (40).

8. The additive manufacturing fiber preform of any of claims 5 to 7, wherein the bindments (16,56,66,88) include plural particles that have generally unitary aspect ratios.

9. The additive manufacturing fiber preform of any of claims 5 to 8, wherein the bindments (16,56,66,88) include plural elongated bindment segments.

10. The additive manufacturing fiber preform of any of claims 5 to 9, wherein the bindments (16,56,66,88) include plural coating segments on the plural elongate fibers (14,54,64,86).

11. The additive manufacturing fiber preform of any of claims 5 to 10, wherein the plural elongate fibers (14,54,64,86) are generally of a filament diameter (24) and the bindments (16,56,66,88) are generally of or less than a bindment segment diameter that is less than or equal to the filament diameter (24).

12. The additive manufacturing fiber preform of any of claims 5 to 11, wherein the bindment segment diameter is less than or equal to 25 percent of the filament diameter (24).

13. The additive manufacturing fiber preform of any of claims 5 to 12, wherein the plural elongate fibers (14,54,64,86) are of one or more filament materials and the bindments (16,56,66,88) are of one or more bindment materials that are different from the filament materials.

14. The additive manufacturing fiber preform of any of claims 5 to 13, wherein the plural elongate fibers (14,54,64,86) include a subset of plural elongate fibers (14,54,64,86) and plural other adjacent elongate fibers (14,54,64,86), and the bindments (16,56,66,88) include encircling bindments (16,56,66,88) that encircle the subset of plural elongate fibers (14,54,64,86) and establish the plural interstitial regions (20,58,68,89,90) between the subset of elongate fibers and the other adjacent elongate fibers (14,54,64,86).

## Patentansprüche

1. Verfahren zur generativen Fertigung eines Faservorformartikels (34), umfassend:
Verteilen (32) eines Faserkabels (10, 50, 60, 80) für generative Fertigung in Konfiguration eines Faservorformartikels (34), wobei das Faserkabel (10, 50, 60, 80) für generative Fertigung ein Bündel (12, 52, 62, 84) aus mehreren länglichen Fasern (14, 54, 64, 86) und Bindungen (16, 56, 66, 88), die zwischen den mehreren länglichen Fasern (14, 54, 64, 86) angeordnet sind, umfasst, wobei die Bindungen (16, 56, 66, 88) mehrere Zwischenbereiche (20, 58, 68, 89, 90) unter den mehreren länglichen Fasern (14, 54, 64, 86) bilden, und
Befestigen (36) der Bindungen (16, 56, 66, 88) mit den länglichen Fasern, um das Faserkabel (10, 50, 60, 80) für generative Fertigung in der Konfiguration des Faservorformartikels (34) mit den mehreren Zwischenbereichen (20, 58, 68, 89, 90) unter den mehreren länglichen Fasern (14, 54, 64, 86) zu halten.

2. Verfahren nach Anspruch 1, das ferner das Befestigen der Bindungen (16, 56, 66, 88) unter Verwendung eines verfestigbaren Matrixmaterials (40) umfasst, das unter den mehreren länglichen Fasern (14, 54, 64, 86) angeordnet ist.

3. Verfahren nach einem der Ansprüche 1 und 2, wobei:
das Verteilen (32) des Faserkabels (10, 50, 60, 80) für generative Fertigung das Verteilen des Faserkabels (10, 50, 60, 80) für generative Fertigung in mehreren aufeinanderfolgenden Schichten des Faserkabels (10, 50, 60, 80) für generative Fertigung umfasst, und
das Befestigen (36) der Bindungen (16, 56, 66, 88) mit den länglichen Fasern das Befestigen der Bindungen (16, 56, 66, 88) der mehreren aufeinanderfolgenden Schichten von Faserkabeln (10, 50, 60, 80) für generative Fertigung umfasst.

4. Verfahren nach einem der Ansprüche 1 bis 3, das ferner Folgendes umfasst:
Aufbringen (38) eines verfestigbaren Matrixmaterials (40) auf den Faservorformartikel (34), einschließlich Aufbringen des verfestigbaren Matrixmaterials (40) auf die mehreren Zwischenbereiche (20, 58, 68, 89, 90); und
Verfestigen (42) des verfestigbaren Matrixmaterials (40).

5. Faservorformartikel für generative Fertigung, der gemäß dem Verfahren nach Anspruch 1 hergestellt ist, umfassend ein Faserkabel (10, 50, 60, 80) für generative Fertigung, das in einer Konfiguration eines Faservorformartikels angeordnet ist, wobei das Faserkabel (10, 50, 60, 80) für generative Fertigung Folgendes umfasst:
ein Bündel (12, 52, 62, 84) aus mehreren länglichen Fasern (14, 54, 64, 86) mit einer ersten Steifigkeit; und
Bindungen (16, 56, 66, 88), die zwischen den mehreren länglichen Fasern (14, 54, 64, 86) angeordnet sind, um eine zweite Steifigkeit bereitzustellen, die größer als die erste Steifigkeit ist, um das Faserkabel (10, 50, 60, 80) für generative Fertigung in der Konfiguration des Vorformartikels zu halten, wobei die Bindungen (16, 56, 66, 88) mehrere Zwischenbereiche (20, 58, 68, 89, 90) unter den mehreren länglichen Fasern (14, 54, 64, 86) und den Bindungen (16, 56, 66, 88) bilden, um ein verfestigbares Matrixmaterial (40) unter den mehreren länglichen Fasern (14, 54, 64, 86) des Faservorformartikels aufzunehmen.

6. Faservorform für generative Fertigung nach Anspruch 5, wobei mindestens einige der Bindungen (16, 56, 66, 88) so konfiguriert sind, dass sie in dem verfestigbaren Matrixmaterial (40) löslich sind.

7. Faservorform für generative Fertigung nach einem der Ansprüche 5 und 6, wobei einige der Bindungen (16, 56, 66, 88) so konfiguriert sind, dass sie in dem verfestigbaren Matrixmaterial (40) löslich sind, und andere der Bindungen (16, 56, 66, 88) so konfiguriert sind, dass sie nicht in dem verfestigbaren Matrixmaterial (40) löslich sind.

8. Faservorform für generative Fertigung nach einem der Ansprüche 5 bis 7, wobei die Bindungen (16, 56, 66, 88) mehrere Partikel umfassen, die im Allgemeinen einheitliche Formverhältnisse aufweisen.

9. Faservorform für generative Fertigung nach einem der Ansprüche 5 bis 8, wobei die Bindungen (16, 56, 66, 88) mehrere längliche Bindungssegmente umfassen.

10. Faservorform für generative Fertigung nach einem der Ansprüche 5 bis 9, wobei die Bindungen (16, 56, 66, 88) mehrere Beschichtungssegmente auf den mehreren länglichen Fasern (14, 54, 64, 86) umfassen.

11. Faservorform für generative Fertigung nach einem der Ansprüche 5 bis 10, wobei die mehreren länglichen Fasern (14, 54, 64, 86) im Allgemeinen einen Filamentdurchmesser (24) aufweisen und die Bindungen (16, 56, 66, 88) im Allgemeinen einen Durchmesser aufweisen, der kleiner oder gleich einem Bindungssegmentdurchmesser ist, der kleiner oder gleich dem Filamentdurchmesser (24) ist.

12. Faservorform für generative Fertigung nach einem der Ansprüche 5 bis 11, wobei der Bindungssegmentdurchmesser kleiner oder gleich 25 Prozent des Filamentdurchmessers (24) ist.

13. Faservorform für generative Fertigung nach einem der Ansprüche 5 bis 12, wobei die mehreren länglichen Fasern (14, 54, 64, 86) aus einem oder mehreren Filamentmaterialien bestehen und die Bindungen (16, 56, 66, 88) aus einem oder mehreren Bindungsmaterialien bestehen, die sich von den Filamentmaterialien unterscheiden.

14. Faservorform für generative Fertigung nach einem der Ansprüche 5 bis 13, wobei die mehreren länglichen Fasern (14, 54, 64, 86) eine Untergruppe mehrerer länglicher Fasern (14, 54, 64, 86) und mehrerer anderer benachbarter länglicher Fasern umfassen (14, 54, 64, 86), und die Bindungen (16, 56, 66, 88) umschließende Bindungen (16, 56, 66, 88) umfassen, die die Untergruppe mehrerer länglicher Fasern (14, 54, 64, 86) umschließen und die mehreren Zwischenbereiche (20, 58, 68, 89, 90) unter der Untergruppe der länglichen Fasern (14, 54, 64, 86) und den anderen benachbarten länglichen Fasern (14, 54, 64, 86) einrichten.

## Revendications

1. Procédé de fabrication additive d'un article à base de préforme fibreuse (34), comprenant :
la distribution (32) d'une étoupe de fibres pour fabrication additive (10, 50, 60, 80) dans une configuration d'article à base de préforme fibreuse (34), l'étoupe de fibres pour fabrication additive (10, 50, 60, 80) comprenant un faisceau (12, 52, 62, 84) de multiples fibres allongées (14, 54, 64, 86) et des organes de liaison (16, 56, 66, 88) interposés parmi les multiples fibres allongées (14, 54, 64, 86), les organes de liaison (16, 56, 66, 88) établissant de multiples régions interstitielles (20, 58, 68, 89, 90) parmi les multiples fibres allongées (14, 54, 64, 86),
et
la fixation (36) des organes de liaison (16, 56, 66, 88) sur les fibres allongées pour maintenir l'étoupe de fibres pour fabrication additive (10, 50, 60, 80) dans la configuration d'article à base de préforme fibreuse (34) avec lesdites multiples régions interstitielles (20, 58, 68, 89, 90) parmi lesdites multiples fibres allongées (14, 54, 64, 86).

2. Procédé selon la revendication 1, comprenant en outre la fixation des organes de liaison (16, 56, 66, 88) au moyen d'un matériau de matrice solidifiable (40) disposé parmi les multiples fibres allongées (14, 54, 64, 86).

3. Procédé selon l'une quelconque des revendications 1 et 2, dans lequel :
la distribution (32) de l'étoupe de fibres pour fabrication additive (10, 50, 60, 80) comprend la distribution de l'étoupe de fibres pour fabrication additive (10, 50, 60, 80) en de multiples couches successives d'étoupe de fibres pour fabrication additive (10, 50, 60, 80), et
la fixation (36) des organes de liaison (16, 56, 66, 88) sur les fibres allongées comprend la fixation entre eux des organes de liaison (16, 56, 66, 88) des multiples couches successives d'étoupe de fibres pour fabrication additive (10, 50, 60, 80).

4. Procédé selon l'une quelconque des revendications 1 à 3, comprenant en outre :
l'application (38) d'un matériau de matrice solidifiable (40) sur l'article à base de préforme fibreuse (34), dont l'application du matériau de matrice solidifiable (40) sur les multiples régions interstitielles (20, 58, 68, 89, 90), et
la solidification (42) du matériau de matrice solidifiable (40).

5. Article à base de préforme fibreuse pour fabrication additive fabriqué selon le procédé selon la revendication 1, comprenant une étoupe de fibres pour fabrication additive (10, 50, 60, 80) distribuée dans une configuration d'article à base de préforme, l'étoupe de fibres pour fabrication additive (10, 50, 60, 80) comprenant :
un faisceau (12, 52, 62, 84) de multiples fibres allongées (14, 54, 64, 86) d'une première rigidité, et
des organes de liaison (16, 56, 66, 88) interposés parmi les multiples fibres allongées (14, 54, 64, 86) pour fournir une deuxième rigidité supérieure à la première rigidité, permettant de maintenir l'étoupe de fibres pour fabrication additive (10, 50, 60, 80) dans la configuration de l'article à base de préforme, les organes de liaison (16, 56, 66, 88) établissant de multiples régions interstitielles (20, 58, 68, 89, 90) parmi les multiples fibres allongées (14, 54, 64, 86), et les organes de liaison (16, 56, 66, 88) pour recevoir un matériau de matrice solidifiable (40) parmi les multiples fibres allongées (14, 54, 64, 86) de l'article à base de préforme fibreuse.

6. Préforme fibreuse pour fabrication additive selon la revendication 5, dans laquelle au moins certains des organes de liaison (16, 56, 66, 88) sont configurés pour être solubles dans le matériau de matrice solidifiable (40).

7. Préforme fibreuse pour fabrication additive selon l'une quelconque des revendications 5 et 6, dans laquelle certains des organes de liaison (16, 56, 66, 88) sont configurés pour être solubles dans le matériau de matrice solidifiable (40) et certains autres organes de liaison (16, 56, 66, 88) sont configurés pour ne pas être solubles dans le matériau de matrice solidifiable (40).

8. Préforme fibreuse pour fabrication additive selon l'une quelconque des revendications 5 à 7, dans laquelle les organes de liaison (16, 56, 66, 88) comprennent de multiples particules dont le rapport de forme est généralement uniforme.

9. Préforme fibreuse pour fabrication additive selon l'une quelconque des revendications 5 à 8, dans laquelle les organes de liaison (16, 56, 66, 88) comprennent de multiples segments de liaison allongés.

10. Préforme fibreuse pour fabrication additive selon l'une quelconque des revendications 5 à 9, dans laquelle les organes de liaison (16, 56, 66, 88) comprennent de multiples segments de revêtement sur les multiples fibres allongées (14, 54, 64, 86).

11. Préforme fibreuse pour fabrication additive selon l'une quelconque des revendications 5 à 10, dans laquelle les multiples fibres allongées (14, 54, 64, 86) ont généralement un certain diamètre de filament (24) et les organes de liaison (16, 56, 66, 88) correspondent généralement ou sont inférieurs à un diamètre de segment de liaison qui est inférieur ou égal au diamètre de filament (24).

12. Préforme fibreuse pour fabrication additive selon l'une quelconque des revendications 5 à 11, dans laquelle le diamètre de segment de liaison est inférieur ou égal à 25 pour cent du diamètre de filament (24).

13. Préforme fibreuse pour fabrication additive selon l'une quelconque des revendications 5 à 12, dans laquelle les multiples fibres allongées (14, 54, 64, 86) sont constituées d'un ou plusieurs matériaux filamenteux et les organes de liaison (16, 56, 66, 88) sont constitués d'un ou plusieurs matériaux de liaison qui sont différents des matériaux de filament.

14. Préforme fibreuse pour fabrication additive selon l'une quelconque des revendications 5 à 13, dans laquelle les multiples fibres allongées (14, 54, 64, 86) comprennent un sous-ensemble de multiples fibres allongées (14, 54, 64, 86) et de multiples autres fibres allongées (14, 54, 64, 86) adjacentes, et les organes de liaison (16, 56, 66, 88) comprennent des organes de liaison encerclants (16, 56, 66, 88) qui encerclent le sous-ensemble de multiples fibres allongées (14, 54, 64, 86) et établissent les multiples régions interstitielles (20, 58, 68, 89, 90) entre le sous-ensemble de fibres allongées (14, 54, 64, 86) et les autres fibres allongées (14, 54, 64, 86) adjacentes,
